# EUROPÄISCHE PATENTANMELDUNG

(11) **EP 3 385 667 A2**
(43) Veröffentlichungstag der Anmeldung: **10.10.2018**
(21) Anmeldenummer: 18164148.1
(22) Anmeldetag: 27.03.2018
(51) Int. Cl.: G01C 15/02

(54) **MARKIERVORRICHTUNG**

(30) Priorität: 07.04.2017 DE 102017107570
(71) Anmelder: Testo SE & Co. KGaA, 79853 Lenzkirch (DE)
(72) Erfinder: ZAHN, Patrick, 79822 Titisee Neustadt (DE); KUPPING, Stephan, 79822 Titisee-Neustadt (DE)
(74) Vertreter: Börjes-Pestalozza, Henrich

(57) **Zusammenfassung**

Markiervorrichtung (1) mit einer Darstellungsvorrichtung (9) zur optisch geführten Ausrichtung auf eine Bearbeitungsstelle (5) eines Objekts (3), wobei in einem Modellspeicher ein digitales Modell (2) des Objekts (3) hinterlegbar ist und dem digitalen Modell (2) wenigstens eine Markierung (4) hinzufügbar ist, die mit einer Bearbeitungsstelle (5) auf dem Objekt (3) korrespondiert, wobei mit einer Messvorrichtung die Lage der Markiervorrichtung (1) in Bezug auf das Objekt (3) bestimmbar ist (Fig. 3).

## Beschreibung

Die Erfindung behandelt eine Markiervorrichtung, mit der ein Bearbeitungspunkt oder eine Bearbeitungsstelle, die auch eine Linie oder ein Kanal sein kann, anzeigbar ist.

Bekannte und verbreitete Markiervorrichtungen sind beispielsweise Linien- oder Kreuzlinien-Laser. Diese projizieren eine waagrechte und/oder senkrechte Linie auf eine Fläche, beispielsweise eine Wand, so dass ein Handwerker sich leicht an dieser Linie orientieren kann. Eine solche Markierung ist insbesondere hilfreich beim Streichen, Fliesenlegen, Schlitzen von Kabelkanälen und dergleichen Arbeiten.

Dabei ist nachteilig, dass der Laser zur Projektion ortsfest an einer Stelle im Raum aufgestellt werden muss. Der Laser kann dann bei Arbeiten im Weg stehen oder eine projizierte Linie wird durch einen Arbeiter zumindest teilweise verdeckt, so dass ein sinnvolles Arbeiten nicht mehr möglich ist.

Die Aufgebe der Erfindung besteht nun darin, eine Markiervorrichtung zu schaffen, die eine verbesserte Markierung von Bearbeitungsstellen und ein ungestörtes Arbeiten ermöglicht.

Diese Aufgabe wird durch eine Markiervorrichtung mit den Merkmalen des Anspruch 1 gelöst.

Die erfindungsgemäße Markiervorrichtung besitzt insbesondere einen Modellspeicher zur Hinterlegung eines digitalen Modells eines Objektes, wobei dem Modell wenigstens eine Markierung hinzufügbar ist. Es können somit Mittel zum Hinzufügen der Markierung ausgebildet sein. Sie besitzt weiterhin eine Messvorrichtung, die zu einer Bestimmung einer Lage der Markiervorrichtung in Bezug auf das Objekt eingerichtet ist, und eine Darstellungsvorrichtung, die zu einer optisch geführten Ausrichtung der Markiervorrichtung auf eine Stelle an dem Objekt, die zu der im Modell hinterlegten Markierung korrespondiert, eingerichtet ist.

Das digitale Modell ist beispielsweise eine zwei- oder dreidimensionale Repräsentation des Objekts, beispielsweise eines Raumes oder eines ganzen Gebäudes. Das digitale Modell umfasst somit Punkte, Linien und/oder geometrische Primitive, die eine Darstellung des Objektes erlauben.

In diesem Modell sind Markierungen hinzufügbar, beispielsweise Punkte oder Linien, die den zu bearbeitenden Stellen entsprechen. Eine solche Markierung kann beispielsweise die Position einer Steckdose oder eines Kabelschlitzes sein. Dabei ist es möglich, dass diese Markierungen innerhalb der Markiervorrichtung hinzufügbar sind oder außerhalb in einem separaten Modellbearbeitungswerkzeug, insbesondere beispielsweise einem 3D-CAD Programm. Durch das Hinzufügen zum Modell stehen die Markierungen in räumlichen Zusammenhang mit dem Modell.

Die Markiervorrichtung besitzt zusätzlich eine Messvorrichtung, mit der die Lage der Markiervorrichtung innerhalb des Raumes bestimmbar ist. Die Markiervorrichtung ist dann beispielsweise mittels der Darstellungsvorrichtung mit Bezug auf das Modell ausrichtbar.

Das bedeutet, dass die Darstellungsvorrichtung anzeigt, sobald die Markiervorrichtung im Raum auf die Markierung zeigt.

Die Markiervorrichtung ist insbesondere als ein portables Gerät ausgebildet, das beispielsweise von einer Person mitgeführt wird. Auf diese Weise ist die Markiervorrichtung nicht im Raum aufzustellen und daher nicht im Weg. Zudem kann die Markierung nicht von einer Person oder einem Gegenstand im Raum abgeschattet werden. Insbesondere kann es zweckmäßig sein, wenn die Markiervorrichtung beispielsweise auf eine Bohrmaschine, eine Schlitzfräse oder eine andere Bearbeitungsmaschine aufsetzbar ist.

Die Markiervorrichtung kann beispielsweise einen Laser aufweisen, der einen Punkt auf ein Objekt abbilden kann. Auf diese Weise ist die Markierung auf dem Objekt einfacher identifizierbar.

Die Darstellungsvorrichtung kann dabei anzeigen, wenn der Punkt des Lasers auf die Position der Markierung gerichtet ist.

In einer besonders vorteilhaften Ausführung weist die Darstellungsvorrichtung eine Projektionsvorrichtung auf, mit der eine Markierung ortsrichtig auf das Objekt projizierbar ist. Auf diese Weise ist nicht nur beispielsweise ein Punkt sondern die Markierung als Ganzes auf das Objekt projizierbar. Beispielsweise ein Kreuz, eine Linie oder auch ein Punkt.

In einer Weiterbildung der Erfindung kann die Darstellungsvorrichtung eine Projektionsvorrichtung aufweisen, mit der eine Lagereferenz auf das Objekt projizierbar ist. Diese Lagereferenz ist vorzugsweise eine großflächige Markierung, beispielsweise ein sehr großes Fadenkreuz. Durch diese Lagereferenz ist es für den Bediener einfacher, die aktuelle Position der Markiervorrichtung innerhalb des Raumes zu finden und auf eine zu bearbeitende Markierung auszurichten. Die Lagereferenz zeigt dabei immer die aktuelle Ausrichtung an dem Objekt an. Bei einem Fadenkreuz befindet sich also der Schnittpunkt der beiden Linien genau an der Stelle auf die die Markiervorrichtung aktuell ausgerichtet ist.

Eine besondere Ausführung der Erfindung sieht vor, dass die Markiervorrichtung eine Erfassungsvorrichtung aufweist, mit der die Lagereferenz erfassbar ist und daraus die Ausrichtung der Markiervorrichtung bestimmbar ist. Die Erfassungsvorrichtung ist vorzugsweise ein separates Gerät, das ortsfest und entfernt vom Objekt aufgebaut ist. Nun kann die Differenz oder die Abweichung dieses Bearbeitungspunktes von dem gewünschten Markierungspunkt erfasst werden, und es kann dem Handwerker wieder angezeigt werden, wie er das Werkzeug verschieben oder verschwenken muss, um die Bearbeitungsrichtung auf den gewünschten Markierungspunkt auszurichten.

Hier besteht jedoch wieder das Problem, dass der tatsächliche Kreuzungspunkt dieses Fadenkreuzes nicht erfassbar sein kann, weil eine Person oder ein Gegenstand im Sichtfeld steht und den Kreuzungspunkt abschattet.

Das Erfassungsgerät kann nun die Ränder des Fadenkreuzes erfassen und verlängern und auf diese Weise den Kreuzungspunkt und damit die Ausrichtung bestimmen und die Lage des Bearbeitungspunkts in oder an dem Objekt erkennen.

In einer alternativen, zweckmäßigen Ausführung der Erfindung weist die Darstellungsvorrichtung eine Anzeige auf, in der die Markierung und/oder die Markiervorrichtung in dem Modell darstellbar ist/sind. Auf diese Weise ist zum einen das Modell und auch die Markierung innerhalb des Modells darstellbar. Zudem kann die aktuelle Position der Markiervorrichtung innerhalb des Modells darstellbar sein. Ein Handwerker oder Benutzer kann dann anhand der Darstellung die Markiervorrichtung sehr leicht auf eine Markierung ausrichten.

In einer besonders vorteilhaften Ausführung der Erfindung, weist die Darstellungsvorrichtung eine Anzeige auf, in der die Markierung ortsrichtig darstellbar ist. Dabei wird die Information aus der Messvorrichtung zur Bestimmung der Lage dazu verwendet, um ein virtuelles Bild zu erzeugen, in dem die Markierung ortsrichtig anzeigbar ist. Insbesondere kann die Anzeige auch in einem überlagerten Realbild des Objekts erfolgen. Dazu kann die Markiervorrichtung eine Kamera aufweisen, in deren Bild die Markierung als Überlagerung ortsrichtig einblendbar ist. Die Darstellungsvorrichtung kann beispielsweise ein Smartphone oder Tabletcomputer sein. Besonders vorteilhaft ist es jedoch, wenn die Darstellungsvorrichtung als virtuelle Datenbrille (Virtual-Reality-Brille) ausgeführt ist, die dem Benutzer ermöglicht, die virtuelle Darstellung des Objekts so wahrzunehmen, als wäre Sie echt. Hier wäre eine überlagerte Darstellung in einem Realbild besonders hilfreich, um im virtuellen Raum die Orientierung zu finden. Neben der Überlagerung in ein Realbild wäre auch die ortsrichtige Einblendung auf eine durchsichtige oder durchscheinende Fläche, gemäß einem HeadUp Display möglich.

Weiterhin kann es vorteilhaft sein, wenn die Darstellungsvorrichtung eine Anzeige aufweist, mit der die Richtung in die die Markiervorrichtung zur Ausrichtung auf die Markierung bewegt oder verschwenkt werden muss anzeigbar ist. Die Richtung kann dabei beispielsweise mit einem Pfeil darstellbar sein. Diese Richtungsanzeige kann anstelle oder zusätzlich zu einer Darstellung des Modells erfolgen.

Alternativ kann die Darstellungsvorrichtung vier Richtungsanzeiger aufweisen, die kreuzförmig angeordnet sind. Diese Richtungsanzeiger können beispielsweise einfache Leuchtdioden sein, die einzeln ansteuerbar sind. Eine solche Anzeige ist sehr kostengünstig und einfach umsetzbar. Es wäre daher möglich diese Anzeige in verschiedene Werkzeuge, wie beispielsweise eine Bohrmaschine zu integrieren. Die Bohrmaschine könnte beispielsweise über eine Funkverbindung mit der Markiervorrichtung verbunden sein, um die Richtungsbefehle zu empfangen.

In einer vorteilhaften Weiterbildung der Erfindung weist die Markiervorrichtung eine Kamera zur bildlichen Erfassung des Objekts auf und die Darstellungsvorrichtung eine Anzeige, in der das erfasste Bild des Objekts und/oder eine Information zur Ausrichtung der Markiervorrichtung und/oder eine Markierung darstellbar ist/sind. Auf diese Weise kann in der Darstellungsvorrichtung nicht nur ein Modell sondern auch ein mit der Kamera aufgenommenes Realbild des Objekts dargestellt werden.

In einer zweckmäßigen Ausgestaltung der Erfindung, ist ein Auswahlmittel vorhanden, mit dem die zu bearbeitende Markierung auswählbar ist.

Ein solches Auswahlmittel können beispielsweise separate Tasten sein, mit denen anhand der Darstellungsvorrichtung eine zu bearbeitende Markierungen anwählbar ist. Das Auswahlmittel kann auch einen berührempfindlichen Bildschirm (TouchScreen) umfassen.

Insbesondere bei mehreren im Modell hinzugefügten Markierungen ist es zweckmäßig, wenn eine Anzeige vorhanden ist, in der die ausgewählte Markierung dargestellt ist. Auf diese Weise kann leicht erkannt werden, welche der Markierungen gerade zur Bearbeitung aktiv ist.

Die erfindungsgemäße Markiervorrichtung kann beispielsweise als ein mobiles Handgerät ausgebildet sein. Alternativ kann die Darstelluungsvorrichtung oder auch eine Richtungsanzeige separat ausgebildet sein.

Insbesondere vorteilhaft ist es, wenn die Markiervorrichtung an einem Werkzeug zur Bearbeitung eines Objektes integriert ist oder mit einem solchen Verbindbar ist. Die Erfindung umfasst daher auch ein Werkzeug, insbesondere eine Bohr-, Fräs-, Schneide-, Säge- oder Schleifmaschine, mit einer erfindungsgemäßen Markiervorrichtung, insbesondere wobei eine Bearbeitungsrichtung des Werkzeugs mit einer Ausrichtung der Markiervorrichtung übereinstimmt.

Es ist dabei auch möglich, dass die Markiervorrichtung beispielsweise als Handgerät ausgebildet ist, das jedoch keine Darstellungsvorrichtung besitzt. Die Darstellungsvorrichtung kann dann separat ausgebildet und beispielsweise kontaktlos, insbesondere per Funkt, mit der Markiervorrichtung verbunden sein. Die Darstellungsvorrichtung kann dann beispielsweise in einem Bearbeitungsgerät integriert oder als separates Gerät an einem Bearbeitungsgerät befestigbar sein.

Eine alternative Ausführung der Erfindung sieht vor, dass die Markiervorrichtung eine stationäre Projektionsvorrichtung aufweist, die ortsfest in einem Raum oder in Bezug auf ein Objekt positionierbar ist und zur Projektion wenigstens einer Markierung, vorzugsweise aller Markierungen, auf das Objekt eingerichtet ist.

Um dabei eventuell auftretende Abschattungen durch einen Gegenstand oder eine Person zu eliminieren, besitzt die Markiervorrichtung ein separates Handgerät mit einem weiteren Projektor, mit dem der abgeschattete Bildausschnitt ergänzend projizierbar ist. Auf diese Weise wird der fehlende Bildinhalt durch den Projektor des Handgeräts ergänzt, so dass insgesamt aus der Position eines Betrachters immer ein vollständiges Bild mit allen Markierungen sichtbar ist.

Die Erfindung umfasst weiterhin ein Verfahren zur Ausrichtung eines Werkzeugs, wobei in einem digitalen Modell eines Objektes eine Markierung angebracht wird und mit dem Werkzeug von einem Benutzer ein Bearbeitungsschritt an einer Stelle an dem Objekt, die zu der Markierung korrespondiert, ausgeführt wird, dadurch gekennzeichnet, dass eine Ausrichtung des Werkzeugs in Bezug auf das Objekt automatisch ermittelt wird und dass der Benutzer anhand der ermittelten Ausrichtung und des digitalen Modells automatisch angeleitet wird, eine Bearbeitungsrichtung des Werkzeugs auf die Stelle an dem Objekt auszurichten.

Dabei ist es insbesondere vorteilhaft, wenn der Benutzer mittels einer automatisch ortsrichtig auf die Stelle projizierten Markierung angeleitet wird.

In einer vorteilhaften Ausführung des Verfahrens, wird der Benutzer durch automatisch generierte Weisungen zu einem Verschwenken des Werkzeugs angeleitet.

Die Erfindung ist nachfolgend anhand eines Ausführungsbeispiels mit Bezug auf die beiliegenden Zeichnungen näher erläutert.

Es zeigt:
- Fig. 1: eine schematische Ansicht einer erfindungsgemäßen Markiervorrichtung zur ortsrichtigen Projektion einer Markierung,
- Fig. 2: eine schematische Ansicht einer erfindungsgemäßen Markiervorrichtung mit einer Darstellungsvorrichtung zur Anzeige des Modells und der Markierung,
- Fig. 3: eine schematische Ansicht einer erfindungsgemäßen Markiervorrichtung mit einer Darstellungsvorrichtung zur Anzeige einer Richtungsinformation,
- Fig. 4: eine schematische Ansicht einer erfindungsgemäßen Markiervorrichtung mit einer Darstellungsvorrichtung mit vier Richtungspfeilen,
- Fig. 5: eine schematische Ansicht der Markiervorrichtung der Fig. 4 an verschiedenen Positionen,
- Fig. 6: eine schematische Ansicht einer erfindungsgemäßen Markiervorrichtung zur Darstellung einer Lagereferenz und einer separaten Erfassungsvorrichtung,
- Fig. 7: eine schematische Ansicht einer Markiervorrichtung mit separaten Auswahltasten zur Auswahl der aktiven Markierungen,
- Fig. 8: eine alternative Markiervorrichtung mit einer zusätzlichen stationären Projektionsvorrichtung und
- Fig. 9: eine schematische Ansicht einer erfindungsgemäßen Markiervorrichtung mit einer Darstellungsvorrichtung zur ortsrichtigen Anzeige der Markierung.

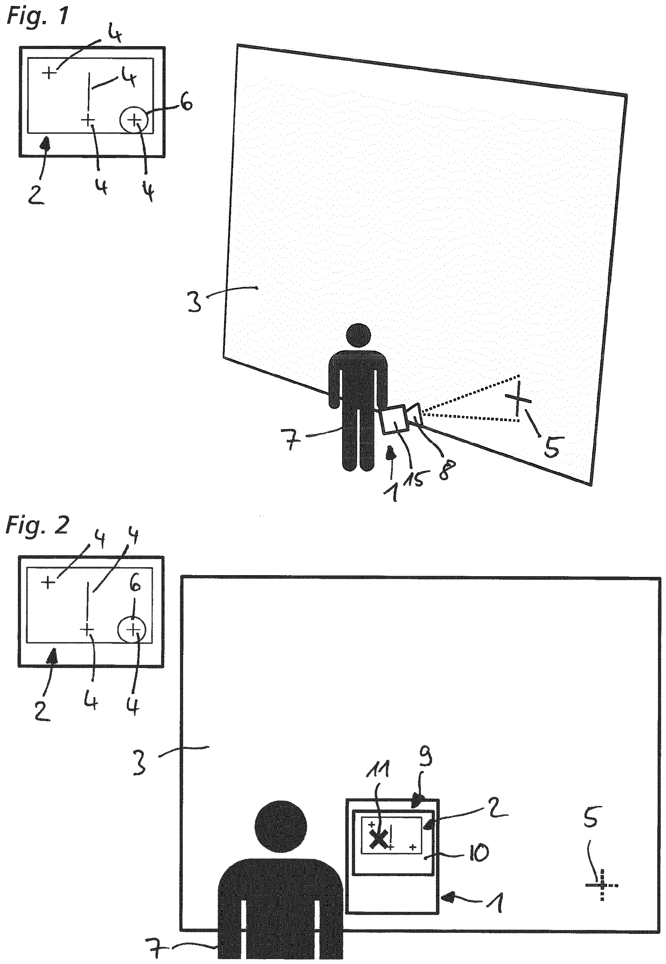

Die Fig. 1 zeigt eine erste Ausführung einer erfindungsgemäßen Markiervorrichtung 1. In der linken Bildhälfte ist eine schematische Darstellung eines digitalen Modells 2 eines Objektes dargestellt. Das Objekt ist in diesem Beispiel eine Wand 3 eines Raumes. Das Modell kann ein zweidimensionales Modell 2 der Wand 3 oder auch ein dreidimensionales Modell eines Raumes sein, in dem die Wand liegt. Dem digitalen Modell 2 sind im Beispiel vier Markierungen 4 hinzugefügt, die jeweils mit einer Bearbeitungsstelle 5 an der Wand 3 korrespondieren. Davon sind drei Bearbeitungsstellen 5 punktförmig und durch eine kreuzförmige Markierung 4 dargestellt. Eine Bearbeitungsstelle 5 ist eine Linie, die auch als solche dargestellt ist. Die gerade aktive Markierung 4 ist zur Verdeutlichung mit einem Kreis 6 umrahmt.

Dieses Modell 3 kann beispielsweise in einem CAD-Programm auf einer Workstation erstellt worden sein. Dort können auch die Markierungen 4 zum Modell 2 hinzugefügt worden sein. Alternativ kann die Markiervorrichtung 1 auch Mittel zum Hinzufügen von Markierungen 4 zum Modell 2 aufweisen, beispielsweise über einen berührempfindlichen Bildschirm (Touchscreen).

Im rechten Bildteil ist die Wand 3 abgebildet. Vor der Wand 3 steht eine Person 7, beispielsweise ein Handwerker, der an den Bearbeitungsstellen 5 Löcher bohren will.

Die Person 7 trägt eine erfindungsgemäße Markiervorrichtung 1, die in diesem Beispiel als tragbares Handgerät 15 ausgebildet ist. Die Markiervorrichtung 1 weist eine Projektionsvorrichtung 8 auf, die derart ausgebildet ist, dass eine Markierung 4 ortsrichtig auf die Wand 3 projizierbar ist. Wie im Modell 2 zu sehen ist, ist die rechte Markierung 4 aktiv. Dementsprechend wird diese Markierung 4 auf die Wand 3 projiziert. Die Projektionsvorrichtung 8 kann beispielsweise einen Laser und einen Ablenkspiegel umfassen, mit dem ein beliebiges Muster projizierbar ist.

Zur Bestimmung der Ausrichtung weist die Markiervorrichtung 1 eine Messvorrichtung auf, die beispielsweise ein oder mehrere Lagesensoren aufweist. Insbesondere vorteilhaft ist es, wenn die Messvorrichtung mehrere Beschleunigungssensoren und mindestens einen Drehratensensor aufweist.

Die Fig. 2 zeigt eine alternative Ausführung der Erfindung. Wie in Fig. 1 ist auch hier im linken Bildteil das Modell 2 der Wand 3 zu sehen.

Die Markiervorrichtung 1 weist hier eine Darstellungsvorrichtung 9 mit einer Anzeige 10 auf, in der die Markierungen 4 und die Markiervorrichtung 1 in dem Modell 2 darstellbar sind. Um die Markiervorrichtung 1 nun auf eine Markierung 4 auszurichten, muss nun lediglich die Markiervorrichtung 1 solange bewegt werden, bis die Darstellung 11 der Markiervorrichtung 1 deckungsgleich auf der Darstellung einer Markierung 4 liegt. Zusätzlich kann auch bei dieser Ausführung der Markiervorrichtung 1 eine Projektionsvorrichtung vorhanden sein, um die so manuell ausgerichtete Markierung 4 auf das Objekt zu projizieren. Alternativ kann die Markiervorrichtung auch nur einen einfachen Laserzeiger aufweisen, der einen Punkt in der Bearbeitungsrichtung auf das Objekt projiziert, um so nach dem Ausrichten die Bearbeitungsstelle optisch kennzuzeichnen.

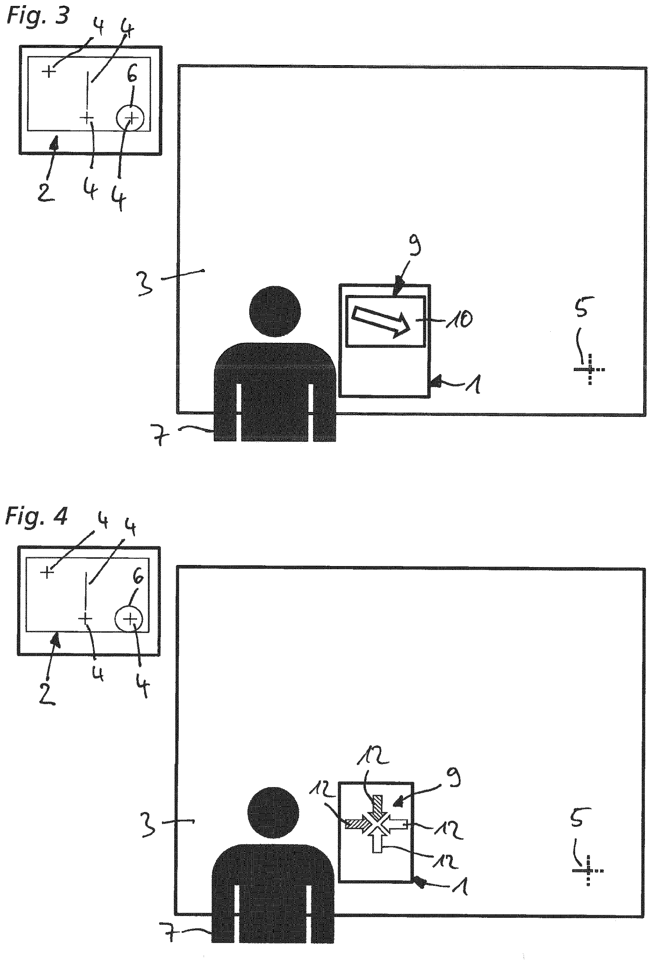

Die Fig. 3 zeigt eine etwas einfachere Ausführung einer erfindungsgemäßen Markiervorrichtung 1. Auch diese Ausführung weist eine Darstellungsvorrichtung 9 mit einer Anzeige 10 auf. Jedoch ist die Anzeige hier nur in der Lage einen Richtungspfeil 12 anzuzeigen, der in die Richtung zeigt, in der die Markiervorrichtung 1 verschwenkt werden muss, um sie auf die zu bearbeitende, also die aktive, Markierung 4 auszurichten. Die Anzeige 10 kann dabei eine einfache monochrome LC-Anzeige oder eine LED-Punktmatrixanzeige sein. Die Anzeige kann auch aus mehreren in einem Kreis angeordneten Leuchtanzeigen, beispielsweise LED, gebildet sein. Auf diese Weise ist die Anzeige wesentlich kostengünstiger und einfacher herstellbar.

Eine noch einfachere und kostengünstigere Ausführung der Erfindung ist in Fig. 4 gezeigt. Hier weist die Darstellungsvorrichtung 9 vier separate optische Anzeigen auf, die im Beispiel als pfeilförmige LED 12 ausgebildet sind. Die Pfeil-LED 12 sind jeweils in die vier Hauptrichtungen ausgerichtet. Über diese Pfeil-LED 12 wird auch hier die Richtung angezeigt, in die die Markiervorrichtung 1 verschwenkt werden muss, um auf die aktive Markierung 4 ausgerichtet zu werden. Diese Anzeige 10 mit vier separaten Pfeil-LED 12 ist besonders einfach herstellbar. Die Anzeige 10 kann beispielsweise auch getrennt von der Markiervorrichtung 1, beispielsweise im Handgriff eines Bearbeitungswerkzeugs, etwa einer Bohrmaschine, angeordnet sein. Auf diese Weise kann die zu bearbeitende Stelle direkt mit dem Werkzeug aufgefunden werden, ohne dass zuvor die Markiervorrichtung in die Hand genommen werden muss. Die Verbindung zwischen Anzeige und Markiervorrichtung kann dabei beispielsweise kontaktlos über eine Funkverbindung erfolgen.

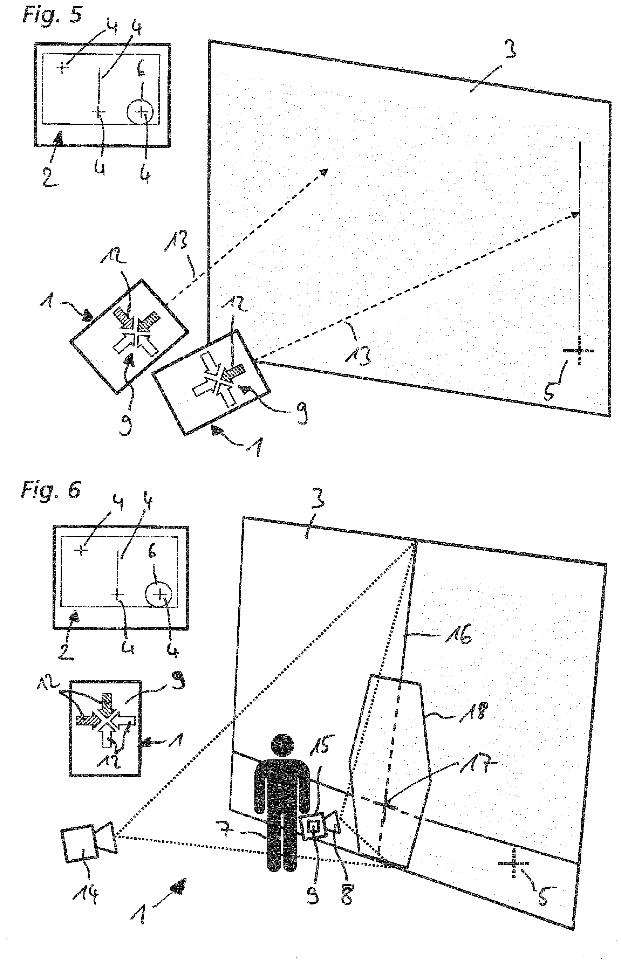

Die Fig. 5 zeigt die Markiervorrichtung 1 der Fig. 4 beispielhaft in zwei verschiedenen Ausrichtungen. Links im Bild ist die Markiervorrichtung 1 auf eine beliebige Stelle der Wand ausgerichtet, wie durch den Richtungspfeil 13 angedeutet. Die aktive Markierung 4 befindet sich rechts unten an der Wand 3, wie im Modell 2 links oben durch den Kreis 6 angedeutet. Von dieser Ausrichtung müsste die Markiervorrichtung 1 daher nach rechts und nach unten verschwenkt werden, um auf die Bearbeitungsstelle 5 ausgerichtet zu werden. In der Anzeige 10 leuchten daher die beiden Pfeil-LED 12, durch Schraffur angedeutet, die nach unten und nach rechts zeigen. Die zweite Markiervorrichtung 1 im Bild ist nun bereits soweit nach rechts verschwenkt, dass sie auf eine senkrechte Linie 14 durch die Bearbeitungsstelle 5 ausgerichtet ist, wie auch hier durch einen Richtungspfeil 13' angedeutet ist. Die Markiervorrichtung 1 muss daher nur noch nach unten verschwenkt werden. In der Anzeige 10 leuchtet daher nur noch die Pfeil-LED 12 nach unten. Sobald die Markiervorrichtung 1 auf die Bearbeitungsstelle 5 ausgerichtet ist, können alle Pfeil-LED 12 ausgeschaltet oder auch eingeschaltet werden.

Die Fig. 6 zeigt nun eine alternative Ausführung der Erfindung, bei der die Markiervorrichtung 1' aus einer stationären Erfassungsvorrichtung 14 und einem Handgerät 15 besteht. Das Handgerät 15 weist einen Projektor 8 auf, der eine Lagereferenz auf die Wand 3 projiziert, im Beispiel ein großes Fadenkreuz 16. Der Kreuzungspunkt 17 des Fadenkreuzes 16 liegt dabei automatisch immer an der Stelle auf die das Handgerät 15 gerade ausgerichtet ist.

Mit der Erfassungsvorrichtung 14 ist das Fadenkreuz 16 erfassbar und daraus die Ausrichtung des Handgeräts 15 bestimmbar ist. Eventuell auftretende Abschattungen 18 durch eine Person 7 kann die Erfassungsvorrichtung 14 durch Verlängerung der abgeschnittenen Linien des Fadenkreuzes 16 auf den Kreuzungspunkt 17 kompensieren. Anhand der so ermittelten Ausrichtung des Handgerätes 15 kann mittels einer Darstellungsvorrichtung 9, beispielsweise mit vier Pfeil-LED 12, eine manuelle Ausrichtung auf die aktive Bearbeitungsstelle 5 erfolgen.

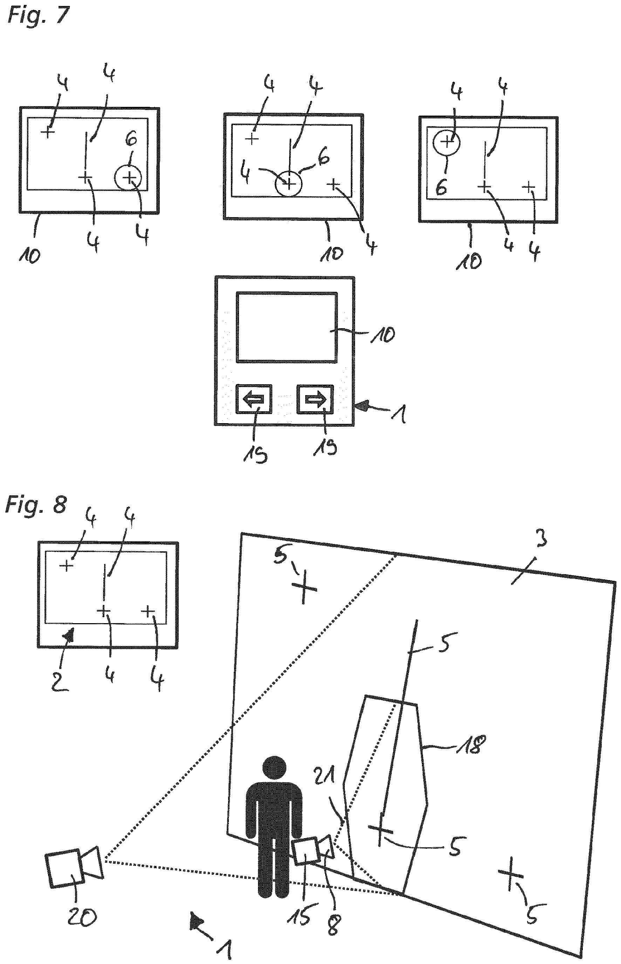

In Fig. 7 ist beispielhaft eine Darstellungsvorrichtung 9 einer erfindungsgemäßen Markiervorrichtung 1 gezeigt. Die Anzeige 10 ist hier zur Darstellung des digitalen Models 2 mit den hinzugefügten Markierungen 4 ausgebildet. Die Darstellungsvorrichtung 9 weist hier zwei Tasten 19 aus, über die die jeweils aktive Markierung 4 auswählbar ist. In der Anzeige 10 ganz links ist beispielsweise die rechte Markierung 4 aktiv, wie durch den Kreis 6 angezeigt. Durch Drücken der linken Taste 19, kann der Kreis 6 der aktiven Markierung nach links verschoben werden, wie durch die beiden nebenliegenden Darstellungen der Anzeige 10 verdeutlicht ist.

Anstelle der Tasten 19 kann beispielsweise auch die Anzeige 10 als Touchscreen ausgebildet sein, so dass die aktive Markierung 4 direkt durch Auswahl auf der Anzeige 10 einstellbar ist.

In Fig. 8 ist eine alternative Ausführung der erfindungsgemäßen Markiervorrichtung 1 gezeigt. Die Markiervorrichtung 1 weist hier ein Handgerät 15 auf, das im Wesentlichen der Fig. 4 entspricht. Zusätzlich weist die Markiervorrichtung 1 eine zweite, stationäre Projektionsvorrichtung 20 auf, die alle Markierungen 4 im Modell 2 auf die Wand 3 projiziert. Eine eventuell auftretende Abschattung 18 einer Markierung 4, beispielsweise durch die Person 7, wird durch eine auffüllende Projektion 21 des abgeschatteten Bereichs 12 durch die Projektionsvorrichtung 8 des Handgeräts 15 beseitigt.

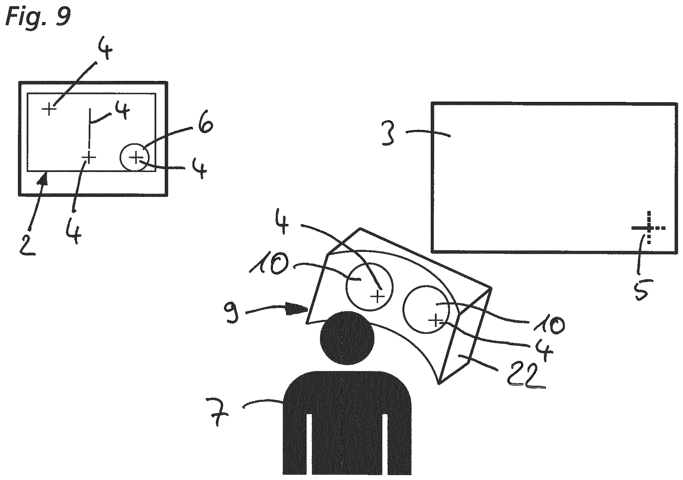

Die Fig. 9 zeigt eine schematische Ansicht einer erfindungsgemäßen Markiervorrichtung 1 mit einer Darstellungsvorrichtung 9 zur ortsrichtigen Anzeige einer Markierung 4. Die Darstellungsvorrichtung 9 ist dabei als Datenbrille 22, oder Virtual-Reality Brille (VR-Brille) ausgebildet. Diese Brillen 22 sind in verschiedenen Ausführungen bekannt. Mittlerweile gibt es auch Halterungen, in die ein herkömmliches Smartphone eingelegt werden kann. Die Darstellungsvorrichtung 9 besitzt eine Messvorrichtung zur Bestimmung der Lage innerhalb des Raumes oder zumindest in Bezug auf das Objekt, hier eine Wand 3, auf dem die Markierung erfolgen soll. Die Darstellungsvorrichtung 9 weist weiter zwei Anzeigen 10 auf, in der die Markierung 4 aufgrund der Lageinformation ortsrichtig darstellbar ist. Zwei Anzeigen 10 sind für die räumliche Darstellung notwendig. Es kann jedoch auch nur eine Anzeige vorhanden sein, die durch eine Maske in zwei Bereiche geteilt ist. Ortsrichtig bedeutet dabei, dass die Markierung 4 so in der Anzeige 10 dargestellt ist, wie eine Person 7 sie sehen würde, wenn sie direkt am Objekt 3 an der Bearbeitungsstelle 5 angebracht wäre.

Die Erfindung beschreibt eine Markiervorrichtung 1 mit einer Darstellungsvorrichtung 9 zur optisch geführten Ausrichtung auf eine Bearbeitungsstelle 5 eines Objekts 3, wobei in einem Modellspeicher ein digitales Modell 2 des Objekts 3 hinterlegbar ist und dem digitalen Modell 2 wenigstens eine Markierung 4 hinzufügbar ist, die mit einer Bearbeitungsstelle 5 auf dem Objekt 3 korrespondiert, wobei mit einer Messvorrichtung die Lage der Markiervorrichtung 1 in Bezug auf das Objekt 3 bestimmbar ist.

### Bezugszeichenliste

- 1: Markiervorrichtung
- 2: digitales Modell
- 3: Wand
- 4: Markierung
- 5: Bearbeitungsstelle
- 6: Kreis
- 7: Person
- 8: Projektionseinrichtung
- 9: Darstellungsvorrichtung
- 10: Anzeige
- 11: Darstellung der Markiervorrichtung
- 12: Pfeil-LED
- 13: Richtungspfeil
- 14: Erfassungsvorrichtung
- 15: Handgerät
- 16: Fadenkreuz
- 17: Kreuzungspunkt
- 18: Abschattung
- 19: Taste
- 20: stationäre Projektionsvorrichtung
- 21: ergänzende Projektion
- 22: Datenbrille

## Patentansprüche

1. Markiervorrichtung (1) mit einem Modellspeicher zur Hinterlegung eines digitalen Modells (2) eines Objektes (3), wobei dem Modell (2) wenigstens eine Markierung (4) hinzufügbar ist, mit einer Messvorrichtung, die zu einer Bestimmung einer Lage der Markiervorrichtung (1) in Bezug auf das Objekt (3) eingerichtet ist, und mit einer Darstellungsvorrichtung (9), die zu einer optisch geführten Ausrichtung der Markiervorrichtung (1) auf eine Stelle (5) an dem Objekt (3), die zu der im Modell hinterlegten Markierung (4) korrespondiert, eingerichtet ist.

2. Markiervorrichtung (1) nach Anspruch 1, **dadurch gekennzeichnet, dass** die Darstellungsvorrichtung (1) eine Projektionsvorrichtung (8) aufweist, mit der eine Markierung (4) ortsrichtig auf das Objekt (3) projizierbar ist.

3. Markiervorrichtung (1) nach einem der vorangehenden Ansprüche, **dadurch gekennzeichnet, dass** die Darstellungsvorrichtung (9) eine Projektionsvorrichtung (8) aufweist, mit der eine Lagereferenz (16) auf das Objekt (3) projizierbar ist.

4. Markiervorrichtung (1) nach einem der vorangehenden Ansprüche, **dadurch gekennzeichnet, dass** die Markiervorrichtung (1) eine Erfassungsvorrichtung (14) aufweist, mit der die Lagereferenz (16) erfassbar ist und daraus die Ausrichtung der Markiervorrichtung (1) bestimmbar ist.

5. Markiervorrichtung (1) nach einem der vorangehenden Ansprüche, **dadurch gekennzeichnet, dass** die Darstellungsvorrichtung eine Anzeige aufweist, in der die Markierung und/oder die Markiervorrichtung in dem Modell darstellbar ist/sind.

6. Markiervorrichtung (1) nach einem der vorangehenden Ansprüche, **dadurch gekennzeichnet, dass** die Darstellungsvorrichtung (9) eine Anzeige (10) aufweist, in der die Markierung (4) ortsrichtig darstellbar ist, insbesondere in einem überlagerten Realbild.

7. Markiervorrichtung (1) nach einem der vorangehenden Ansprüche, **dadurch gekennzeichnet, dass** die Darstellungsvorrichtung (9) eine Anzeige (10) aufweist, mit der die Richtung in die die Markiervorrichtung (1) zur Ausrichtung auf die Markierung bewegt oder verschwenkt werden muss, anzeigbar ist.

8. Markiervorrichtung (1) nach einem der vorangehenden Ansprüche, **dadurch gekennzeichnet, dass** die Darstellungsvorrichtung (9) vier Richtungsanzeiger (12) aufweist, die kreuzförmig angeordnet sind.

9. Markiervorrichtung (1) nach einem der vorangehenden Ansprüche, **dadurch gekennzeichnet, dass** die Markiervorrichtung (1) eine Kamera zur bildlichen Erfassung des Objekts (3) aufweist und die Darstellungsvorrichtung (9) eine Anzeige (10) aufweist, in der das erfasste Bild des Objekts und/oder eine Information zur Ausrichtung der Markiervorrichtung (1) und/oder eine Markierung (4) darstellbar ist/sind.

10. Markiervorrichtung (1) nach einem der vorangehenden Ansprüche, **dadurch gekennzeichnet, dass** ein Auswahlmittel (19) vorhanden ist, mit dem die zu bearbeitende Markierung (4) auswählbar ist und/oder eine Anzeige (10) vorhanden ist, in der die ausgewählte Markierung (4) dargestellt ist.

11. Werkzeug zur Bearbeitung eines Objektes, insbesondere Bohr-, Fräs-, Schneide-, Säge- oder Schleifmaschine, mit einer Markiervorrichtung nach einem der vorangehenden Ansprüche, insbesondere wobei eine Bearbeitungsrichtung des Werkzeugs mit einer Ausrichtung der Markiervorrichtung übereinstimmt.

12. Verfahren zur Ausrichtung eines Werkzeugs, wobei in einem digitalen Modell (2) eines Objektes (3) eine Markierung (4) angebracht wird und mit dem Werkzeug von einem Benutzer (7) ein Bearbeitungsschritt an einer Stelle (5) an dem Objekt (3), die zu der Markierung (4) korrespondiert, ausgeführt wird, **dadurch gekennzeichnet, dass** eine Ausrichtung des Werkzeugs in Bezug auf das Objekt (3) automatisch ermittelt wird und dass der Benutzer (7) anhand der ermittelten Ausrichtung und des digitalen Modells (2) automatisch angeleitet wird, eine Bearbeitungsrichtung des Werkzeugs auf die Stelle (5) an dem Objekt (3) auszurichten.

13. Verfahren nach Anspruch 12, **dadurch gekennzeichnet, dass** der Benutzer (7) mittels einer automatisch ortsrichtig auf die Stelle (5) projizierten Markierung (4) angeleitet wird.

14. Verfahren nach Anspruch 12 oder 13, **dadurch gekennzeichnet, dass** der Benutzer (7) durch automatisch generierte Weisungen zu einem Verschwenken des Werkzeugs angeleitet wird.
